# EUROPÄISCHE PATENTSCHRIFT

(11) **EP 4 324 317 B1**
(45) Veröffentlichungstag und Bekanntmachung des Hinweises auf die Patenterteilung: **18.06.2025**
(21) Anmeldenummer: 23191277.5
(22) Anmeldetag: 14.08.2023
(51) Int. Cl.: A01C 7/08, A01C 7/12, A01C 19/02

(54) **DOSIERER ZUM DOSIEREN VON DOSIERGUT**
DOSING UNIT FOR DOSING MATERIAL
DOSEUR POUR LE DOSAGE DE PRODUITS À DOSER

(30) Priorität: 15.08.2022 DE 102022120531
(43) Veröffentlichungstag der Anmeldung: 21.02.2024
(73) Patentinhaber: Lemken GmbH & Co KG, 46519 Alpen (DE)
(72) Erfinder: van Kann, Andreas, 53949 Dahlem (DE)

(56) Entgegenhaltungen:
- EP-A1- 3 918 900
- AT-B- 387 129
- DE-A1- 102020 126 994
- DE-A1- 102020 127 013

## Beschreibung

Die vorliegende Erfindung betrifft einen Dosierer zum Dosieren von Erntegut gemäß dem Oberbegriff des Anspruches 1. Weiterhin ist eine landwirtschaftliche Maschine, insbesondere mechanische Drillmaschine, gemäß Anspruch 18 Gegenstand der vorliegenden Erfindung. Ein Dosierer der eingangs genannten Art ist aus der DE 101 55 395 A1 bekannt. Der Dosierer zum Dosieren von Dosiergut ist mit einem Dosierradgehäuse, in dem zumindest ein drehbares Dosierrad zum Dosieren des Dosiergutes angeordnet ist, sowie einer drehbar angetriebenen Welle zum Antreiben des Dosierrades ausgeführt. Der Dosierer ist in einem Normalbetrieb, in welchem der Dosierer einer Dosiererreihe der als Drillmaschine ausgeführten landwirtschaftlichen Maschine angetrieben ist, und einem Fahrgassenbetrieb, in welchem der Dosierer im Bereich von Fahrgassen stillgesetzt ist, betreibbar. Hierzu ist die jeweilige Betriebsart des Dosierers vor Inbetriebnahme durch einen manuellen Eingriff festzuglegen. Weitere Beispiele von Dosierern für landwirtschaftliche Maschinen sind offenbart in DE 10 2020 126994 A1, DE 10 2020 127013 A1, AT 387 129 B und EP 3 918 900 A1.

Ausgehend vom vorstehend genannten Stand der Technik liegt der Erfindung die Aufgabe zugrunde, einen Dosierer zum Dosieren von Erntegut sowie eine landwirtschaftliche Maschine der eingangs genannten Art weiterzubilden, welche sich durch eine höhere Flexibilität bei der Umstellung zwischen verschiedenen Betriebsarten auszeichnet.

Diese Aufgabe wird durch einen Dosierer mit den Merkmalen des unabhängigen Patentanspruchs 1 gelöst. Vorteilhafte Ausführungsformen und Weiterbildungen sind den hiervon abhängigen Ansprüchen zu entnehmen.

Gemäß Anspruch 1 wird ein Dosierer zum Dosieren von Dosiergut vorgeschlagen, mit einem Dosierradgehäuse, in dem zumindest ein drehbares Dosierrad zum Dosieren des Dosiergutes angeordnet ist, sowie einer drehbar angetriebenen Welle zum Antreiben des Dosierrades. Erfindungsgemäß ist vorgesehen, dass auf der Welle ein in axialer Richtung relativbewegliches Abtriebszahnrad angeordnet ist, welches ein Antriebszahnrad des Dosierrades antreibt, das auf einer separaten Antriebswelle des Dosierrades angeordnet ist, wobei ein von einem Aktor bewegtes Stellmittel das Abtriebszahnrad relativ zur Welle axial verschiebt, um das Abtriebszahnrad zwischen zwei Stellungen zu überführen, in denen das Abtriebszahnrad und das Antriebszahnrad miteinander in Eingriff oder außer Eingriff stehen. Durch eine Ansteuerung oder Betätigung des Aktors lässt sich der Dosierer individuell zu- oder abschalten. Somit lassen sich neben dem Normalbetrieb und dem Fahrgassenbetrieb weitere Betriebsarten des Dosierers schalten, wenn dieser mit weiteren Dosierern in einer Dosiererreihe nebeneinander angeordnet ist.

Insbesondere kann der Aktor als Elektromotor oder als ein mechanisch, pneumatisch oder hydraulisch betätigbarer Aktor ausgeführt sein.

Bevorzugt kann das Stellmittel ein gegenüber der Welle axial gesichertes und drehfest angeordnetes Stellelement umfassen, welches zum translatorischen Bewegen des Abtriebszahnrades auf einer schiefen Ebene gleitet. Hierzu kann das Stellelement zum translatorischen Bewegen des Abtriebszahnrades auf einer zwischen dem Stellelement und einem koaxial zur Welle angeordneten Steuerelement ausgebildeten schiefen Ebene gleiten.

Gemäß einer bevorzugten Weiterbildung kann eine koaxial zur und drehfest auf der Welle angeordnete und in axialer Richtung relativbewegliche Hohlwelle vorgesehen sein, auf der das Abtriebszahnrad drehfest angeordnet ist, wobei das Stellmittel die vom Aktor auf das Stellmittel übertragene Bewegung in eine axiale Bewegung der Hohlwelle überführt.

Insbesondere kann der Aktor eine rotatorische Bewegung auf das auf der Hohlwelle angeordnete Stellmittel übertragen und das Stellmittel kann die vom Aktor übertragene rotatorische Bewegung in eine translatorische Bewegung der Hohlwelle überführen. Diese Ausführung und Anordnung des Stellmittels ist besonders bauraumsparend.

Bevorzugt kann das auf der Welle oder der Hohlwelle axial gesichert und drehfest angeordnete Stellelement zum translatorischen Bewegen der Hohlwelle auf einer zwischen dem Stellelement und/oder einem koaxial zur Hohlwelle und/oder einem am Dosierradgehäuse angeordneten Steuerelement ausgebildeten schiefen Ebene gleiten. Die schiefe Ebene kann als zumindest eine axiale Stirnfläche an dem Steuerelement und/oder dem Stellelement ausgeführt sein, welche zur Längsachse der Hohlwelle, in Umfangsrichtung gesehen, geneigt ausgeführt ist bzw. sind. An dem Stellelement kann ein oder mehrere Führungselemente angeordnet sein, welche entlang der schiefen Ebene rollen oder gleiten. Alternativ kann die schiefe Ebene als zumindest eine koaxial zur Hohlwelle, abschnittsweise schraubenförmig verlaufende radiale Ausnehmung an dem Steuerelement und/oder an dem Stellelement ausgeführt sein, in welcher jeweils ein Führungselement geführt ist.

Gemäß einer Weiterbildung kann das Stellmittel ein Rückstellmittel umfassen, welches der Unterstützung bei einem in Eingriff bringen von Abtriebszahnrad und Antriebszahnrad dient. Das Rückstellmittel kann eine Rückstellkraft erzeugen, welche das Einrücken von Abtriebszahnrad und Antriebszahnrad zumindest unterstützt.

Hierzu kann das Rückstellmittel als Energiespeicher, insbesondere eine Feder ausgeführt sein, besonders bevorzugt als Axialfeder, Tellerfeder, Schraubenfeder oder Elastomerfeder. Die Ausführung als Energiespeicher, insbesondere als Feder, hat den Vorteil, dass dieser die von dem Stellmittel auf die Hohlwelle zum Ausrücken des Antriebszahnrades aufgebrachte kinetische Energie als potentielle Energie speichert und beim Einrücken wieder freigibt.

Alternativ kann das Rückstellmittel als hydraulisch oder pneumatisch betätigbarer Zylinder, als Elektromotor, Magnet oder als Elektromagnet ausgeführt sein. Hierdurch kann eine Zwangsrückführung des Stellmittels bewirkt werden. Insbesondere kann die zur Zwangsrückführung des Stellmittels aufgebrachte Kraft steuerbar sein.

Gemäß einer weiteren Alternative kann das Rückstellmittel als eine weitere schiefe Ebene ausgebildet sein, welche eine zur schiefen Ebene des Stellmittels konträre Bewegung bewirkt. Somit kann durch eine gegenüber dem Vorgang des Ausrückens des Antriebszahnrades gegensinnige Bewegung des Aktors der Vorgang des Einrückens unterstützt oder durchgeführt werden.

Insbesondere kann das Stellmittel ein als Zahnrad ausgeführtes Stellelement umfassen, welches auf einem koaxial zur Welle oder Hohlwelle angeordneten Hohlwellensegment als Stellelement drehfest angeordnet ist und mit einem von dem Aktor angetriebenen Zahnrad in Eingriff steht. Der Aktor ist bevorzugt in das den Dosierer aufnehmende Dosierradgehäuse integriert oder an diesem angeordnet. Eine Antriebswelle des Aktors, auf der das angetriebene Zahnrad angeordnet ist, ist bevorzugt achsparallel zur Längsachse der Hohlwelle angeordnet. Das Zahnrad als Teil des Stellmittels kann beispielsweise als ein im Wesentlichen kreissektorförmiges Zahnradsegment ausgeführt sein. Der Zentriwinkel des im Wesentlichen kreissektorförmigen Zahnradsegments beträgt bevorzugt zwischen 90° und 150°, besonders bevorzugt zwischen 110° und 130°.

Alternativ kann das Stellmittel ein Kettenritzel oder eine Riemenscheibe umfassen, welches auf einem koaxial zur Hohlwelle angeordneten Hohlwellensegment drehfest angeordnet ist und mit einem von dem Aktor angetriebenen Kettenritzel oder Riemenschiebe durch eine Kette oder einen Riemen trieblich verbunden ist.

Bevorzugt können das Abtriebszahnrad und das Antriebszahnrad als geradverzahnte oder schrägverzahnte Zahnräder ausgeführt sein. Bevorzugt sind das Abtriebszahnrad und das Antriebszahnrad schrägverzahnt ausgeführt, wodurch der Vorgang des Einrückens vereinfacht wird. Zudem kann bei schrägverzahntem Abtriebszahnrad und das Antriebszahnrad unter Last geschaltet werden, d.h. der Dosierer kann im laufenden Betrieb, insbesondere außerhalb des Vorgewendes, zu- oder abgeschaltet werden.

Bevorzugt kann zur Begrenzung der auf das Stellmittel übertragenen, insbesondere rotatorischen, Bewegung ein Begrenzungsmittel vorgesehen sein. Durch das Begrenzungsmittel lässt sich ein maximaler Verstellweg des Abtriebszahnrades beim Ein- und Ausrücken definieren.

Dabei kann das Begrenzungsmittel dazu eingerichtet sein, die, insbesondere rotatorische, Bewegung des Stellmittels mechanisch oder elektromechanisch zu begrenzen.

Gemäß einer bevorzugten Weiterbildung kann ein auf der schiefen Ebene gleitendes Steuerelement als ein Innenring und ein Außenring ausgeführt sein, die koaxial zur Hohlwelle angeordnet am Dosierradgehäuse sind, wobei der Außenring gegenüber dem Innenring in Umfangsrichtung verstellbar ausgeführt ist. Hierzu kann der Außenring mit einer Innenverzahnung und der Innenring mit einer Außenverzahnung ausgeführt sein.

Gemäß einer bevorzugten Weiterbildung kann dem Dosierer ein Überwachungsmittel zur Überwachung der auf das Stellmittel übertragenen translatorischen oder rotatorischen Bewegung zugeordnet sein.

Insbesondere kann das Überwachungsmittel der als ein Schrittmotor ausgeführte Aktor, ein Potentiometer, ein Anschlagschalter, ein Positionssensor oder ein Strom- oder Strompulsmessgerät sein.

Weiterhin wird die eingangs gestellt Aufgabe durch eine landwirtschaftliche Maschine, insbesondere mechanische Drillmaschine, mit zumindest einer Dosiererreihe, in der mehrere Dosierer nebeneinander angeordnet sind, gelöst, wobei die Dosierer nach einem der Ansprüche 1 bis 17 ausgebildet sind. Es darf auf alle Ausführungen zu dem vorschlagsgemäßen Dosierer verwiesen werden.

Die Dillmaschine kann eine Steuereinheit umfassen, welche, jeweils in Abhängigkeit von ihrer Ausführung, der Ansteuerung der Aktoren dienen kann. Durch die Steuereinheit sind die Aktoren der Dosierer individuell ansteuerbar. Insbesondere können die Aktoren der Dosierer automatisch angesteuert werden, vorzugsweise in Abhängigkeit von Positionsortungssignalen. Damit lässt sich insbesondere die Genauigkeit bei einem Betrieb mit Teilbreitenschaltung, dem sogenannten Section-Control, dahingehend verbessern, dass die Dosierer oder zumindest paarweise einzeln zu- und abgeschaltet werden können. Dies kann unabhängig von ihrer Position innerhalb der Dosierreihe erfolgen.

Die vorliegende Erfindung wird nachstehend anhand von in den Zeichnungen dargestellten Ausführungsbeispielen näher erläutert:
Es zeigen:
- Fig. 1: schematisch und exemplarisch ein Dosierradgehäuse eines Dosierers gemäß dem Stand der Technik in Seitenansicht;
- Fig. 2: schematisch und exemplarisch eine Ansicht einer Drillmaschine von schräg hinten;
- Fig. 3: schematisch und exemplarisch eine isometrische Ansicht eines Dosierers in einer ersten Betriebsstellung;
- Fig. 4: schematisch und exemplarisch eine Ansicht von schräg oben auf den Dosierers in der ersten Betriebsstellung;
- Fig. 5: schematisch und exemplarisch eine isometrische Ansicht des Dosierers in einer zweiten Betriebsstellung;
- Fig. 6: schematisch und exemplarisch eine Ansicht von schräg oben auf den Dosierers in der zweiten Betriebsstellung;
- Fig. 7: schematisch und exemplarisch eine isometrische Teilansicht des Dosierers gemäß Fig. 3 in der ersten Betriebsstellung;
- Fig. 8: schematisch und exemplarisch eine isometrische Teilansicht des Dosierers gemäß Fig. 5 in der zweiten Betriebsstellung;
- Fig. 9: schematisch und exemplarisch eine Teilansicht einer Dosierreihe der Drillmaschine gemäß einer Ausführungsform, bei welcher zwei Dosierer durch einen gemeinsamen Aktor betätigbar sind;
- Fig. 10: schematisch und exemplarisch eine isometrische Teilansicht der Dosierreihe gemäß Fig. 9;
- Fig. 11: schematisch und exemplarisch eine Teilansicht einer Dosierreihe der Drillmaschine gemäß einer Ausführungsform, bei welcher zwei Paare benachbart angeordneter Dosierer durch jeweils einen Aktor individuell betätigbar sind;
- Fig. 12: schematisch und exemplarisch eine Teilansicht einer Dosierreihe der Drillmaschine gemäß einer Ausführungsform, bei welcher zwei benachbarte Dosierer durch jeweils einen Aktor individuell betätigbar sind; und
- Fig. 13: schematisch und exemplarisch eine Teilansicht einer Dosierreihe der Drillmaschine gemäß einer Ausführungsform, bei welcher mehrere Dosierer durch jeweils einen Aktor individuell betätigbar sind.

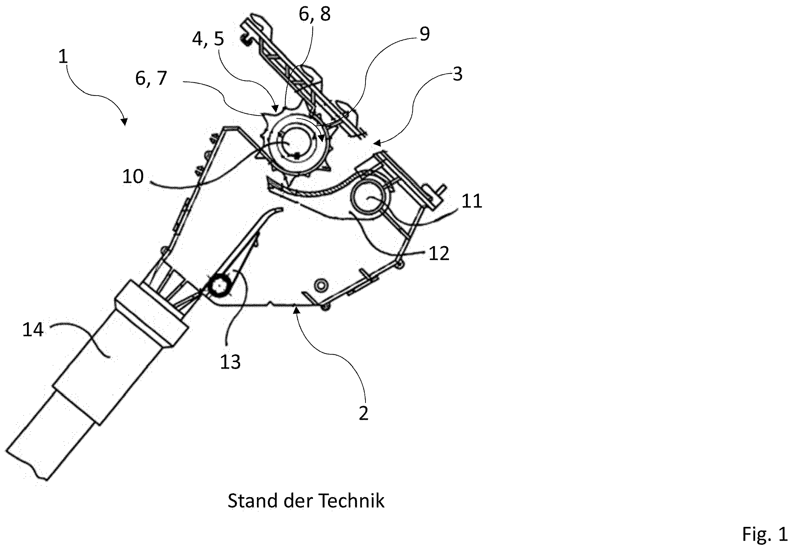

In Fig. 1 ist schematisch und exemplarisch ein Dosierradgehäuse 2 eines Dosierers 1 gemäß dem Stand der Technik in Seitenansicht dargestellt. Das in der Fig. 1 dargestellte Dosierradgehäuse 2 wird an der Rückwand eines Saatgutbehälters einer nicht dargestellten landwirtschaftlichen Maschine befestigt. Das Saatgut fließt aufgrund von Schwerkraft durch eine Öffnung 3 in das Dosierradgehäuse 2 bis zu einem kombinierten Särad 4. Das Särad 4 weist zwei Säradteile auf, ein breiteres Grobsärad 5 mit Stegen 6 und ein schmales Feinsärad mit Nocken. Das Feinsärad ist koaxial zum Grobsärad 5 angeordnet, wobei es in der dargestellten Seitenansicht durch das Grobsärad 5 verdeckt ist. Das Grobsärad 5 weist unterschiedlich hohe Stege 6 auf. In Umfangsrichtung des Grobsärades 5 gesehen sind abwechselnd hohe Stege 7 und niedrige Stege 8 angeordnet. Die Stege 6 sind dreieckförmig ausgebildet und in Drehrichtung 9 schleppend angeordnet.

Das Grobsärad 5 und das nicht dargestellte Feinsärad sind nebeneinander im Dosierradgehäuse 2 angeordnet und auf einer Säwelle 10 gelagert. Die Säwelle 10 treibt das Grobsärad 5 und das Feinsärad an. Durch einen Bund ist das kombinierte Särad 4 zusätzlich in einer U-förmigen Ausnehmung des Dosierradgehäuses 2 geführt bzw. gelagert. Unterhalb des Särades 4 befindet sich eine Bodenklappe 12 mit einer Bodenklappenwelle 11 und eine Entleerungsklappe 13, die von Säbetrieb auf Abdrehmodus umgeschaltet werden kann. Während des Säbetriebs der landwirtschaftlichen Maschine fördert das Särad 4 das Saatgut in ein Särohr 14, welches dann von dort zu nicht dargestellten Säscharen gelangt. Der Dosierer 1 gemäß dem Stand der Technik ist in der DE 101 55 395 A1 detailliert offenbart.

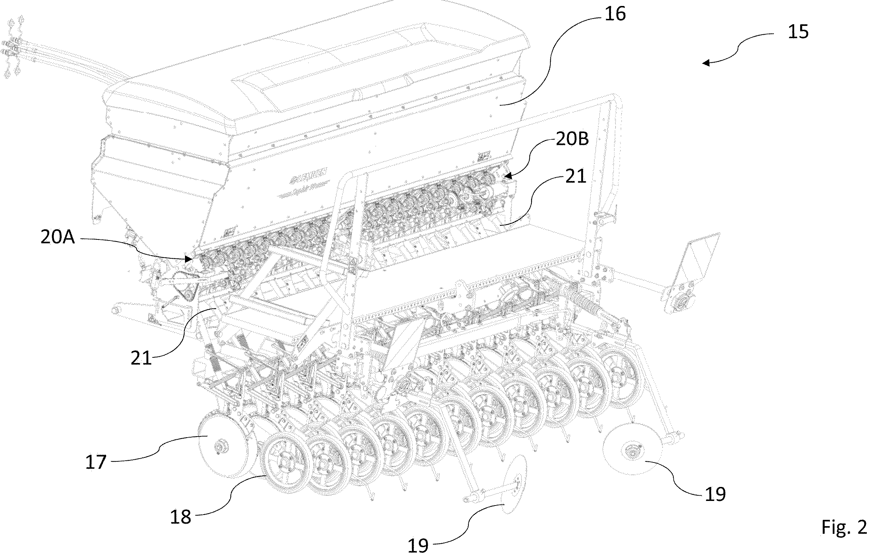

In Fig. 2 ist schematisch und exemplarisch eine Ansicht einer mechanischen Drillmaschine 15 von schräg hinten dargestellt. Die Drillmaschine 15 weist einen mit Saatgut befüllbaren Saatguttank 16 auf. Das Saatgut gelangt zu in zwei Dosierreihen 20A, 20B nebeneinander angeordneten Dosierern 22, welche das Saatgut in ein dem jeweiligen Dosierer 22 nachgeordnetes Särohre 21 fördern. Von den Särohren 21 gelangt das Saatgut weiter zu Säscharen 17. Hinter den Säscharen 17 sind Tiefenführungsrollen 18 sowie zwei optionale Hohlscheiben 19 zur Vorlaufmarkierung angeordnet.

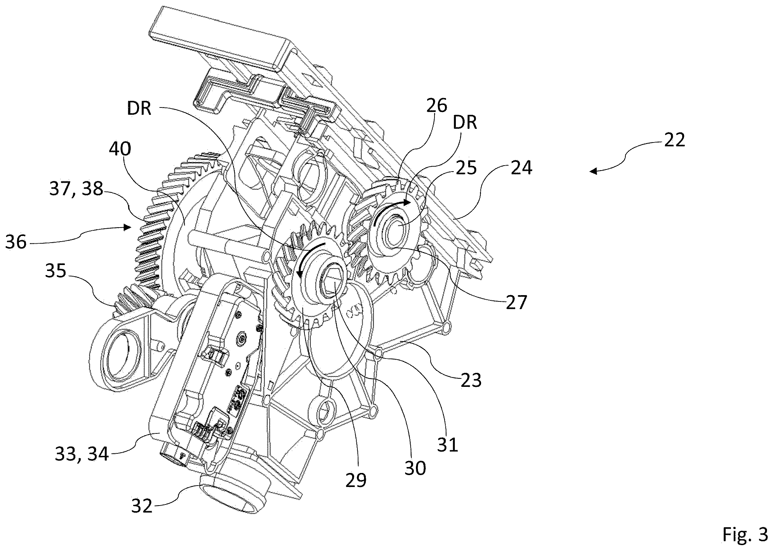

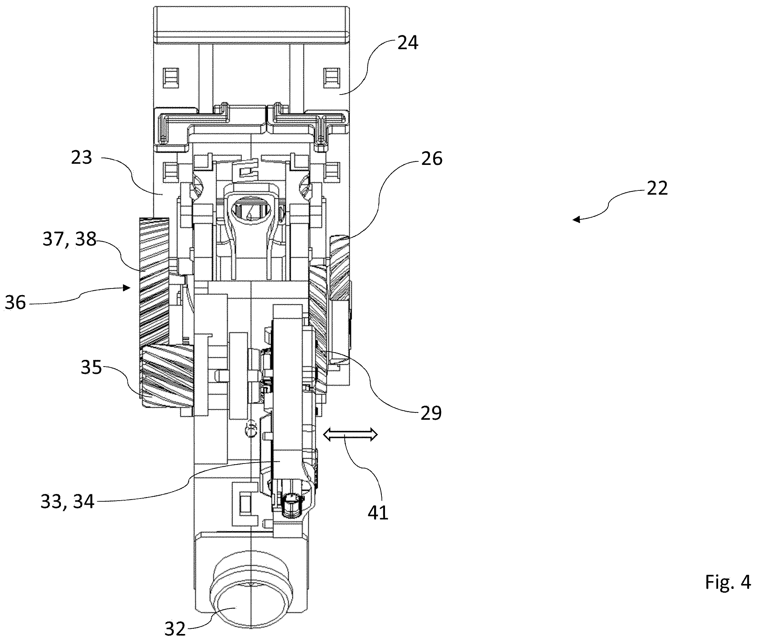

Die Darstellung in Fig. 3 zeigt schematisch und exemplarisch eine isometrische Ansicht des Dosierers 22 in einer ersten Betriebsstellung. In Fig. 4 ist der Dosierer 22 gemäß Fig. 3 in einer Ansicht von schräg oben dargestellt. Der Dosierer 22 umfasst ein Dosierradgehäuse 23, in welchem ein Dosierrad 43 auf einer Dosierradwelle 25 angeordnet ist. Die Dosierradwelle 25 ist im Dosierradgehäuse 23 gelagert. Das Dosierrad 43 kann einteilig oder zweiteilig ausgeführt sein. Das Dosierradgehäuse 23 weist einen Wandsegment 24 auf, mit welchem das Dosierradgehäuse 23 am Saatguttank 16 lösbar durch eine kraft- und/oder formschlüssige Verbindung befestigt ist. Zum Antreiben des Särades ist ein Antriebszahnrad 26 auf der Dosierradwelle 25 angeordnet. Das Antriebszahnrad 26 und mit diesem das Dosierrad 43 drehen in einer Drehrichtung DR. Das Antriebszahnrad 26 kann beispielsweise mittels einer Welle-Nabe-Verbindung auf der Dosierradwelle 25 drehfest angeordnet sein. Alternativ kann auf der Dosierradwelle 25 ein Außengewindeabschnitt 27 vorgesehen sein, welcher eine der Drehrichtung DR entgegengesetzte Steigung aufweist. Der Außengewindeabschnitt 27 ist durch einen radialen Flansch in axialer Richtung begrenzt. Die Nabe des Antriebszahnrades 26 weist ein mit dem Außengewindeabschnitt 27 korrespondierend ausgeführtes Innengewinde auf.

Auf einer Welle 28, insbesondere Sechskantwelle, ist ein Abtriebszahnrad 29 in axialer Richtung relativverschiebbar angeordnet. Im dargestellten Ausführungsbeispiel ist das Abtriebszahnrad 29 auf einer Hohlwelle 30 angeordnet. Die Hohlwelle 30 weist eine Innenkontur 31 auf, welche der Außenkontur der als Sechskantwelle ausgeführten Welle 28 entspricht. Jede Dosierreihe 20A, 20B kann zum Antreiben der Dosierer 22 jeweils eine Welle 28 aufweisen. Die jeweilige Welle 28 erstreckt sich entsprechend der Breite der Dosierreihen 20A, 20B im Wesentlichen über die halbe Breite der Drillmaschine 15. Alternativ kann die Welle 28 als eine einzelne durchgehende Welle ausgeführt sein, welche beide Dosierreihen 20A, 20B antreibt oder in zwei Teilwellen unterteilt sein, welche miteinander drehfest verbunden sind. Im unverbundenen Zustand wird eine der ausgewählten Teilwellen nicht angetrieben. Das Abtriebszahnrad 29 kann analog dem Antriebszahnrad 26 auf einem Außengewindeabschnitt der Hohlwelle 30 befestigt sein, wobei der Außengewindeabschnitt der Hohlwelle 30 ebenfalls eine der Drehrichtung DR des Das Abtriebszahnrades 29 entgegengesetzte Steigung aufweist.

An der Unterseite des Dosierradgehäuses 23 befindet sich ein Anschlussstutzen 32, an welchem das jeweilige Särohr 21 angeschlossen ist. Im oder am Dosierradgehäuse 23 ist ein als Elektromotor 34 ausgeführter Aktor 33 angeordnet. Der Aktor 33 bewegt ein Stellmittel 36, welches dazu eingerichtet ist, das Abtriebszahnrad 29 auf der Welle 28 axial zu verschieben. Dies dient dazu, das Abtriebszahnrad 29 zwischen den beiden Stellungen zu überführen, in denen das Abtriebszahnrad 29 und das Antriebszahnrad 26 miteinander in Eingriff stehen oder außer Eingriff sind. Das Stellmittel 36 umfasst ein als Zahnrad 38 ausgeführtes Stellelement 37, ein Rückstellmittel 39 sowie ein Steuerelement 40. Der Aktor 33 kann, wie exemplarisch dargestellt, als Elektromotor 34 oder als ein mechanisch, pneumatisch oder hydraulisch betätigbarer Aktor ausgeführt sein. Ein mechanisch betätigbarer Aktor könnte eine manuell zu bedienende Hebelanordnung sein.

Gemäß dem in Fig. 3 dargestellten Ausführungsbeispiel ist der Aktor 33 als Elektromotor 34 ausgeführt. Auf einer Antriebswelle des Elektromotors 34 ist ein Zahnrad 35 angeordnet, welches das als Stellelement 37 ausgeführte Zahnrad 38 bewegt, hier in eine rotatorische Bewegung versetzt. Die Zahnräder 35 und 38 sind bevorzugt zweiteilig ausgeführt, wodurch eine Montage, eine Nachrüstung bzw. ein Auswechseln vereinfacht wird. Das Stellmittel 36 überführt die vom Aktor 33 auf das Stellmittel 36, hier und vorzugsweise das Zahnrad 38, übertragene rotatorische Bewegung in eine translatorische Bewegung 41 der Hohlwelle 30. Dies führt zu einer Verschiebung des Abtriebszahnrades 29 relativ zur Welle 28. Durch die translatorische Bewegung 41 der Hohlwelle 30 wird das Abtriebszahnrad 29 in eine Stellung überführt, in der das Abtriebszahnrad 29 und das Antriebszahnrad 26 außer Eingriff sind, wie in Fig. 4 dargestellt. In der ersten Betriebsstellung fördert der Dosierer 22 kein Saatgut.

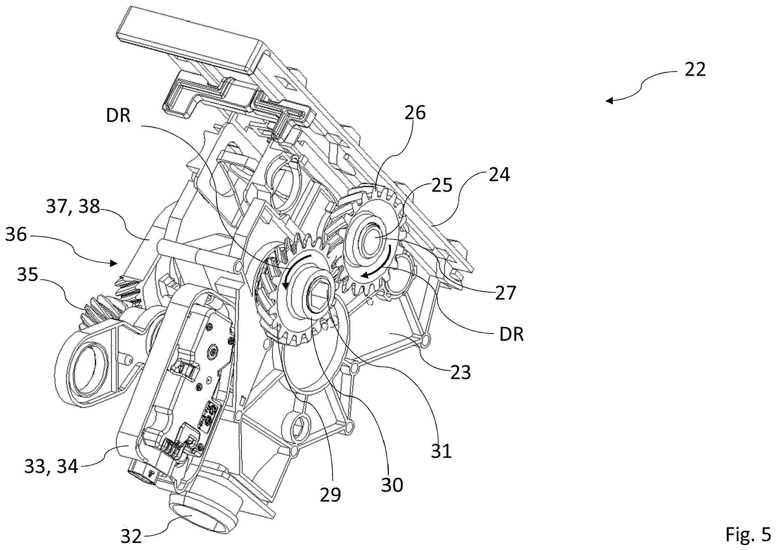

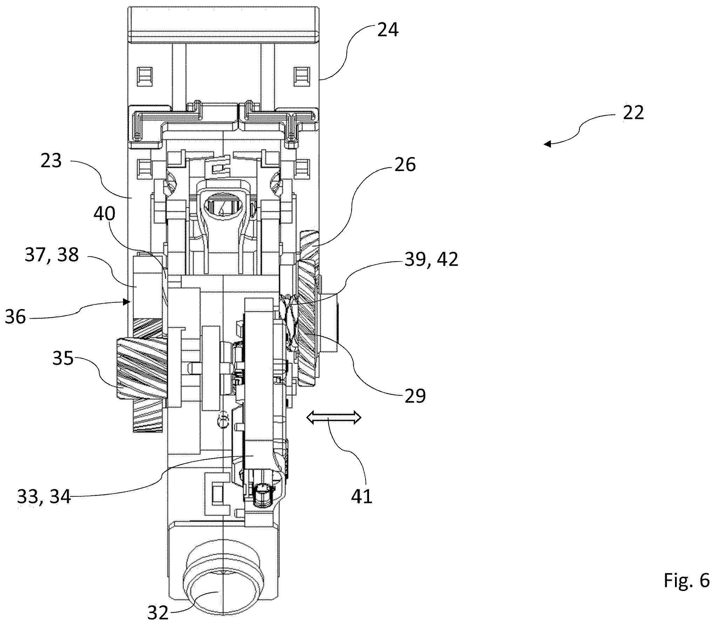

In Fig. 5 ist schematisch und exemplarisch eine isometrische Ansicht des Dosierers 22 in einer zweiten Betriebsstellung dargestellt. Die Darstellung in Fig. 6 zeigt schematisch und exemplarisch eine Ansicht von schräg oben auf den Dosierers 22 in der zweiten Betriebsstellung. In der zweiten Betriebsstellung stehen das Abtriebszahnrad 29 und das Antriebszahnrad 26 miteinander in Eingriff und der Dosierer 22 fördert Saatgut.

Wie aus Fig. 6 ersichtlich, ist auf der Hohlwelle 30 das von dem Stellmittel 36 umfasste Rückstellmittel 39 angeordnet. Das Rückstellmittel 39 dient der Unterstützung bei einem in Eingriff bringen von Abtriebszahnrad 29 und Antriebszahnrad 26. Das Rückstellmittel 39 kann als Energiespeicher, insbesondere als eine Feder 42, bevorzugt als Axialfeder, Tellerfeder, Schraubenfeder oder Elastomerfeder, ausgeführt sein. Bei der Ausführung des Rückstellmittels 39 als Feder 42 wird die kinetische Energie, die vom Aktor 33 auf das Stellmittel 36 übertagen wird, temporär als potentielle Energie gespeichert.

Alternativ kann das Rückstellmittel 39 als hydraulisch oder pneumatisch betätigbarer Zylinder, als Elektromotor oder Elektromagnet ausgeführt sein. Derartige Rückstellmittel 39 ermöglichen eine aktive Rückführung von der ersten Betriebsstellung in die zweite Betriebsstellung. Eine Ausführung des Rückstellmittels 39 als Magnet ist ebenfalls denkbar.

Um den Vorgang des Einrückens zusätzlich zu unterstützen, sind das Antriebszahnrad 26 und das Abtriebszahnrad 29 mit einer Schrägverzahnung ausgeführt. Wesentlich ist, dass bei schrägverzahntem Abtriebszahnrad 26 und Antriebszahnrad 29 unter Last geschaltet werden kann. Der jeweilige Dosierer 22 kann im laufenden Betrieb, insbesondere außerhalb des Vorgewendes, zu- oder abgeschaltet werden.

Eine Ausführung des Antriebszahnrades 26 und des Abtriebszahnrades 29 mit einer Geradverzahnung ist ebenfalls denkbar.

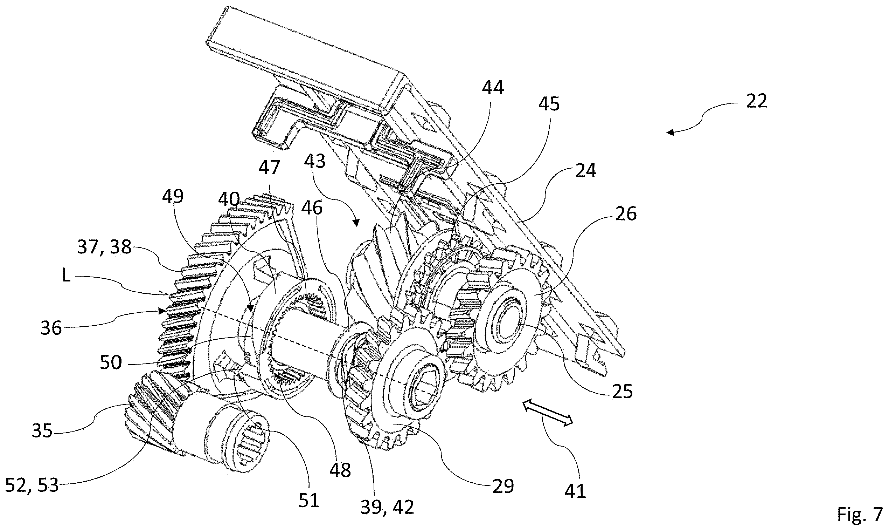

In Fig. 7 ist schematisch und exemplarisch eine isometrische Teilansicht des Dosierers 22 gemäß Fig. 3 in der ersten Betriebsstellung dargestellt, in welcher das Antriebszahnrad 26 und das Abtriebszahnrad 29 außer Eingriff stehen. Das Dosierrad 43 ist mehrteilig ausgeführt und weist ein Grobsärad 44 und ein Feinsärad 45 auf, die auf der Dosierradwelle 25 angeordnet sind. Die Feder 42 stützt sich zwischen einem radialen Flansch 46 auf der Hohlwelle 30 und der Nabe des Abtriebszahnrades 29 ab.

Das Steuerelement 40 ist als ein ringförmiges Bauteil ausgeführt, welches hier und vorzugsweise an dem Dosierradgehäuse 23 fixiert ist. Das Steuerelement 40 weist eine Innenverzahnung 47 auf, die mit einer Außenverzahnung 48 auf der Hohlwelle 30 oder der Nabe des Zahnrades 38 in Eingriff steht. Das Zahnrad 38 als Teil des Stellmittels 36 ist als ein im Wesentlichen kreissektorförmiges Zahnradsegment ausgeführt. Der Zentriwinkel des im Wesentlichen kreissektorförmigen Zahnrades 38 beträgt bevorzugt zwischen 90° und 150°, besonders bevorzugt zwischen 110° und 130°.

Das auf der Welle 28 oder der Hohlwelle 30 axial gesichert und drehfest angeordnetes Stellelement 37, gleitet zum translatorischen Bewegen der Hohlwelle 30 auf einer zwischen dem Stellelement 37 und dem koaxial zur Hohlwelle 30 angeordneten Steuerelement 40 ausgebildeten schiefen Ebene 49. Die schiefe Ebene 49 ist als zumindest eine axiale Stirnfläche 50 an dem Steuerelement 40 und/oder dem Stellelement 37, hier dem Zahnrad 38, ausgeführt, welche zur Längsachse L der Hohlwelle 30 geneigt ausgeführt ist bzw. sind. Bevorzugt sind drei Stirnflächen 50 in Umfangsrichtung des Steuerelementes 40 und/oder dem Stellelement 37 äquidistant beabstandet angeordnet. Entlang der jeweiligen schiefe Ebene 49 gleitet oder rollt zumindest ein Führungselement 51, welches hier und vorzugsweise als axialer Vorsprung oder Nocken an der Nabe des Zahnrades 38 respektive des Stellelementes 37 ausgeführt ist. Durch die abschnittsweise Drehung des Zahnrades 38 mittels des vom Aktor 33 angetriebenen Zahnrades 35 gleitet das zumindest eine Führungselement 51 entlang der jeweiligen schiefe Ebene 49 in axialer Richtung, wodurch sich der axiale Abstand zwischen dem Zahnrad 38 und dem Steuerelement 40 vergrößert. Dabei wird die Hohlwelle 30 durch das sich drehende Zahnrad 38 translatorisch mitbewegt.

Weiterhin ist zur Begrenzung der auf das Stellmittel 36 übertragenen, insbesondere rotatorischen, Bewegung ein Begrenzungsmittel 52 vorgesehen. Dazu kann das Begrenzungsmittel 52 dazu eingerichtet sein, die, insbesondere rotatorische, Bewegung mechanisch oder elektromechanisch zu begrenzen. Im einfachsten Fall kann das Begrenzungsmittel 52 ein Endanschlag 53 an der jeweiligen schiefe Ebene 49 sein, der die rotatorische Bewegung des Zahnrades 38 begrenzt. Um eine Überlastung des als Elektromotor 34 ausgeführten Aktors 33 zu verhindern, kann mittels eines Strommessgerätes das Auftreten einer Strom- bzw. Spannungsspitze ausgewertet werden, um das Anliegen des zumindest einen Führungselementes 51 am Endanschlag 53 zu bestimmen. Entsprechend kann von einer Steuervorrichtung die Stromversorgung des Elektromotors 34 unterbrochen werden. Alternativ oder zusätzlich kann der Elektromotor 34 als Schrittmotor ausgeführt sein, sodass die rotatorische Bewegung des Zahnrades 38 durch eine vorgebbare Anzahl der auszuführenden Schritte begrenzt wird.

Gemäß einem weiteren Aspekt ist vorgesehen, dass dem Dosierer 22 ein Überwachungsmittel zur Überwachung der auf das Stellmittel 36 übertragenen translatorischen und/oder rotatorischen Bewegung zugeordnet ist. Das Überwachungsmittel kann der als ein Schrittmotor ausgeführte Aktor 33, ein Potentiometer, ein Anschlagschalter oder ein Strom- oder Strompulsmessgerät sein.

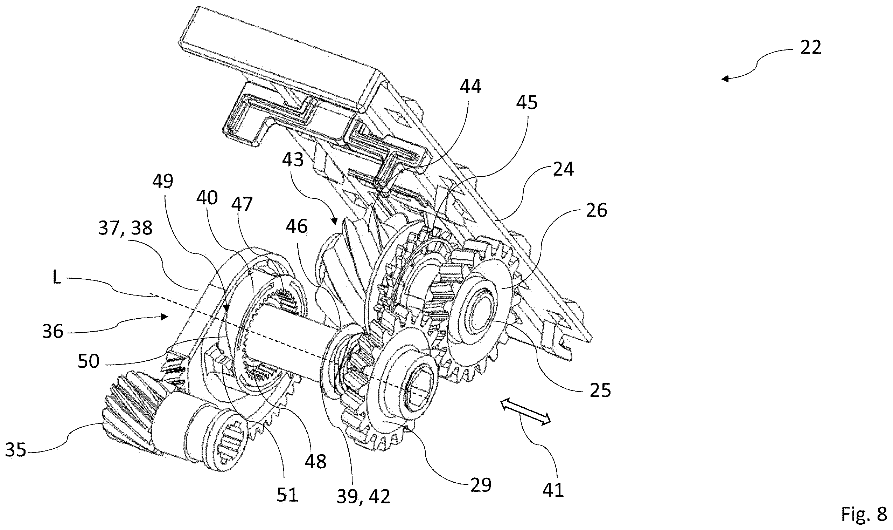

In Fig. 8 ist schematisch und exemplarisch eine isometrische Teilansicht des Dosierers 22 gemäß Fig. 5 in der zweiten Betriebsstellung dargestellt, in welcher das Antriebszahnrad 26 und das Abtriebszahnrad 29 miteinander in Eingriff stehen.

Die nachfolgenden Ausführungen gelten für beide Dosierreihen 20A, 20B der Drillmaschine 15 entsprechend.

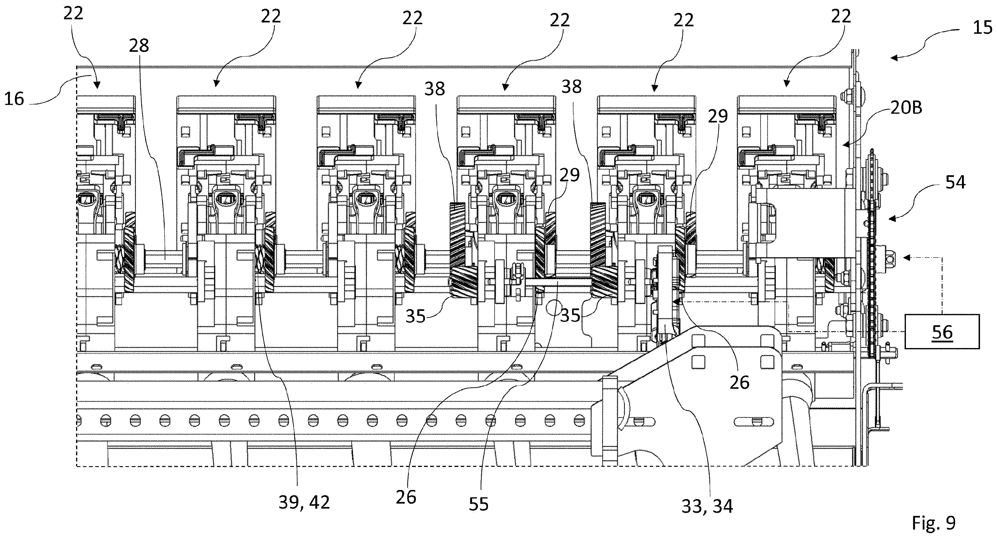

Fig. 9 stellt schematisch und exemplarisch eine Teilansicht einer Dosierreihe 20B der Drillmaschine 15 gemäß einer Ausführungsform dar, bei welcher zwei Dosierer 22 der Dosierreihe 20B durch einen gemeinsamen Aktor 33 betätigbar sind. Hierzu sind die Zahnräder 35 zweier benachbarter Dosierer 22 durch eine gemeinsame Koppelwelle 55 miteinander verbunden. Nur ein einem der beiden Dosierern 22 zugeordneter Aktor 33 treibt die Koppelwelle 55 und die darauf drehfest angeordneten Zahnräder 35 an. Die Koppelwelle 55 weist einen polygonen Querschnitt auf. Die Koppelwelle 55 kann beispielsweise als Vierkantwelle ausgeführt sein. Zum Antreiben der durchgehenden Welle 28 für die Dosierreihe 20B ist eine separate Antriebsvorrichtung 54 vorgesehen.

Die Dillmaschine 15 kann eine Steuereinheit 56 umfassen, welche, jeweils in Abhängigkeit von der Ausführung, der Ansteuerung des Aktors 33 und/oder der Auswertung von Signalen des Begrenzungsmittels 52 dienen kann. Die Steuereinheit 56 ermöglicht es zudem, die Dosierer 22 entfernt zu bedienen, insbesondere aus der Kabine einer Zugmaschine heraus, welche die Drillmaschine 15 antreibt. Hierzu kann eine Datenverarbeitungsvorrichtung und/ oder ein Bedienterminal als Steuereinheit 56 verwendet werden. Diese können in der Kabine der Zugmaschine und / oder auf der Drillmaschine 15 angeordnet sein. Denkbar ist auch eine Ansteuerung mittels einer mobilen Datenverarbeitungsvorrichtung, beispielsweise einem Mobilfunktelefon respektive Smartphone oder einem Tablet-PC, auf denen eine entsprechende Anwendungssoftware installiert ist. Die Antriebsvorrichtung 54 kann ebenfalls durch die Steuereinheit 56 angesteuert werden.

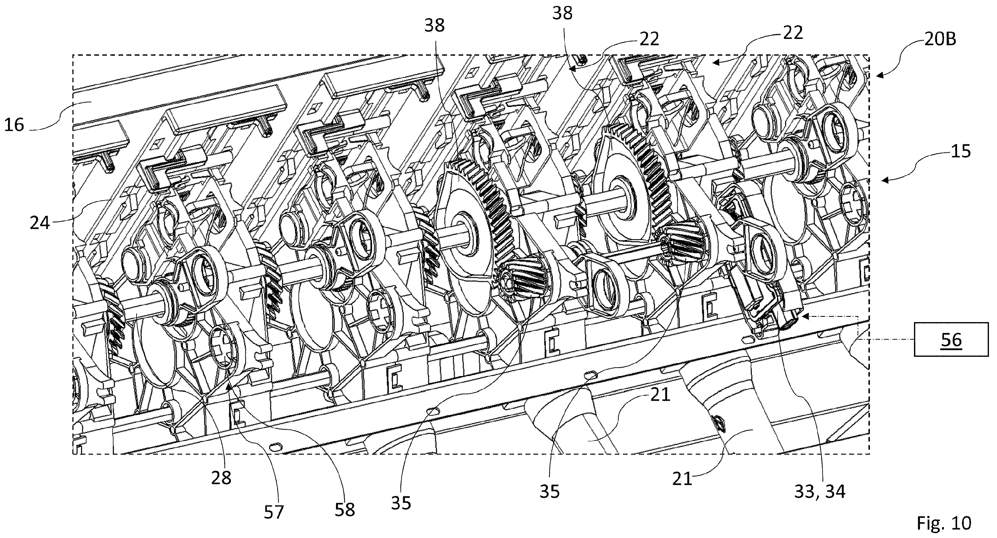

Die Darstellung in Fig. 10 zeigt schematisch und exemplarisch eine isometrische Teilansicht der Dosierreihe 20B gemäß Fig. 9. Entsprechend der Ansteuerung des Aktors 33 stehen das Antriebszahnrad 26 und das Abtriebszahnrad 29 der beiden benachbarten Dosierer 22 außer Eingriff.

Die in den Fig. 9 und 10 gezeigte Anordnung der Dosierer 22, die durch die gemeinsame Koppelwelle 55 steuerungstechnisch miteinander verbunden sind, ist prinzipiell auf alle weiteren Dosierer 22 der jeweiligen Dosierreihe 20A, 20B übertragbar. Die in den Fig. 9 und 10 beispielhaft dargestellte Ausführungsform ermöglicht eine einfache Umschaltung der Dosierer 22 zwischen dem Normalbetrieb und dem Fahrgassenbetrieb.

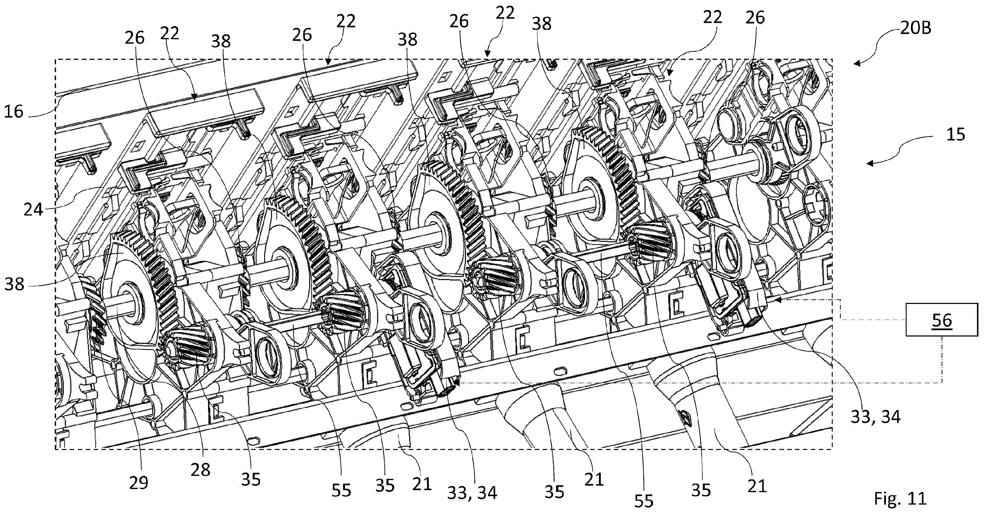

In Fig. 11 ist schematisch und exemplarisch eine Teilansicht der Dosierreihe 20B der Drillmaschine 15 gemäß einer Ausführungsform dargestellt, bei welcher zwei Paare benachbart angeordneter Dosierer 22 durch jeweils einen Aktor 33 betätigbar sind. Die Steuereinheit 56 ist dazu eingerichtet, die Aktoren 33 der paarweise angetriebenen Dosierer 22 unabhängig voneinander anzusteuern. Die Zahnräder 35 zweier benachbarter Dosierer 22, die ein Paar bilden, sind durch die Koppelwelle 55 miteinander verbunden. Der jeweilige einem Paar Dosierer 22 zugeordnete Aktor 33 treibt nur die den Dosierern 22 zugehörigen Zahnräder 35 an, die durch die Koppelwelle 55 miteinander trieblich verbunden sind.

Die Ausführung der Dillmaschine 15 mit den Dosierern 22 gemäß den Fig. 9 bis 11 ermöglicht eine abgestufte Teilbreitenschaltung der Dosierreihen 20A, 20B. Es lassen sich jeweils paarweise Dosierer 22 zu oder abschalten. Dies ist unabhängig von ihrer Anordnung innerhalb der Dosierreihe 20A, 20B möglich.

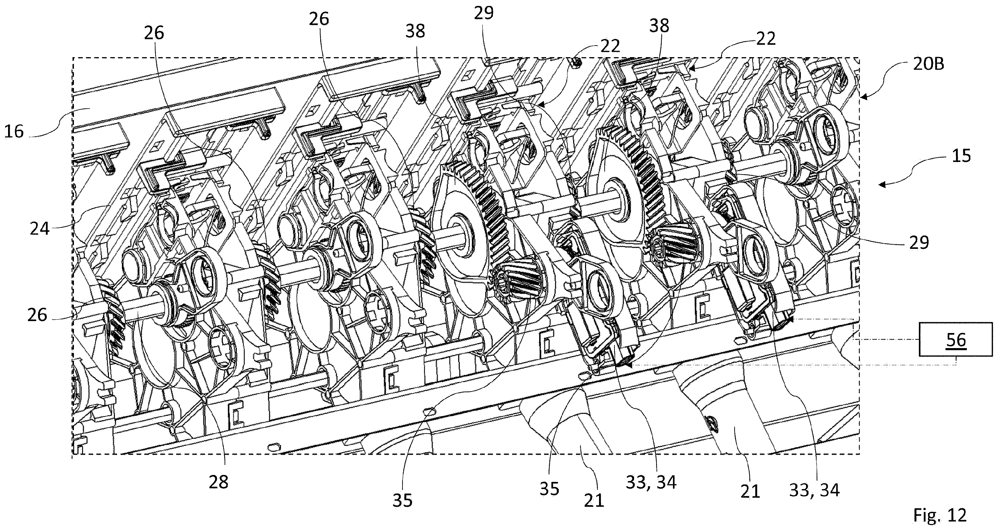

Die Darstellung in Fig. 12 zeigt schematisch und exemplarisch eine Teilansicht einer Dosierreihe 20B der Drillmaschine 15 gemäß einer Ausführungsform, bei welcher zwei benachbarte Dosierer 22 durch jeweils einen Aktor 33 individuell betätigbar sind.

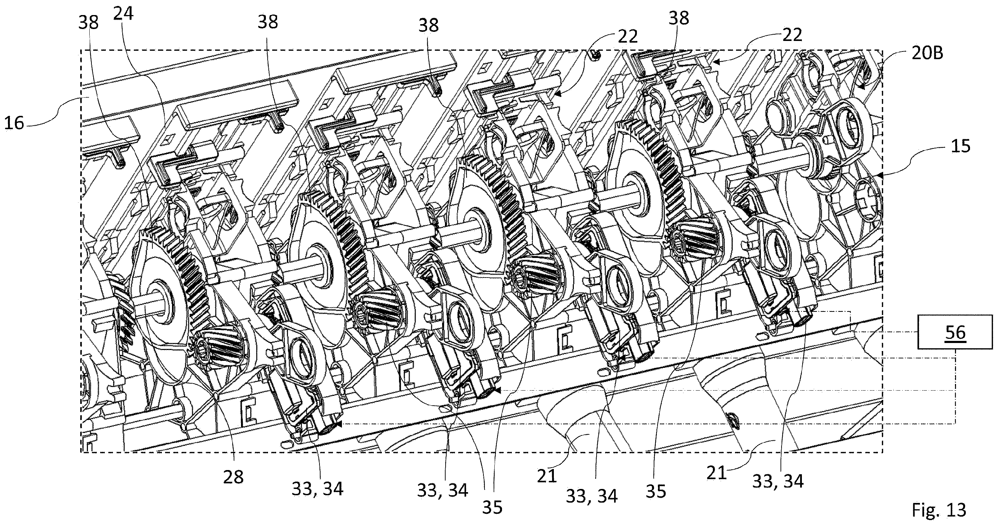

Die Darstellung in Fig. 13 zeigt schematisch und exemplarisch eine Teilansicht einer Dosierreihe 20B der Drillmaschine 15 gemäß einer Ausführungsform, bei welcher mehrere Dosierer 22 durch jeweils einen Aktor 33 individuell betätigbar sind. Die Ausführung der Drillmaschine 15 mit Dosierern 22, die jeweils unabhängig voneinander durch die Steuereinheit 56 ansteuerbar sind, wird die größte Flexibilität bei einem Betrieb mit Teilbreitenschaltung ermöglicht. Der Teilbreitenbetrieb der Drillmaschine 15 mit Dosierern 22 die jeweils paarweise angesteuert werden können, ist in vergleichbarer Weise möglich.

Den in den Fig. 9 bis 13 gezeigten Ausführungsformen liegt die Überlegung zugrunde, dass die erfindungsgemäße Ausgestaltung eines Dosierers 22 eine Vielzahl an Kombinationen zulässt, um die Drillmaschine 15 auszustatten. Wahlweise lässt sich der Fahrgassenbetrieb wie auch der Teilbreitenbetrieb realisieren, indem einzelne Dosierer 22 individuell abgeschaltet werden oder jeweils paarweise, wenn die Stellmittel 36 zweier benachbarter Dosierer 22 durch einen gemeinsamen Aktor 33 betätigt werden. Dies ermöglicht auch eine, insbesondere individuelle, Anpassung an unterschiedliche Fahrgassenbreiten. Ebenso lässt sich der Betrieb der Drillmaschine 15 in Teilbreitenschaltung, insbesondere automatisiert, flexibilisieren. Die Ansteuerung der Dosierer 22 beim Betrieb der Drillmaschine 15 in Teilbreitenschaltung kann in Abhängigkeit von Positionsortungssignalen erfolgen. Zudem ist es denkbar, mittels der Steuereinheit 56 zusätzlich auf Felddaten und/oder Routenplanungsdaten zurückzugreifen, um die zeitliche Koordination der Ansteuerung der Dosierer 22, insbesondere beim Betrieb der Drillmaschine 15 in Teilbreitenschaltung, zu optimieren.

Ein weiterer Vorteil der Dosierer 22 respektive der mit den erfindungsgemäßen Dosierern 22 ausgeführten Drillmaschine 15 resultiert aus der Modularität der Gehäuse 24, welche eine einfache Nachrüstung von Stellmitteln 36 und Aktoren 33 ermöglicht. Der jeweilige Aktor 33 kann an einem dafür vorgesehenen Gehäuseabschnitt 57, wie beispielsweise aus der Darstellung Fig. 10 ersichtlich, montiert sein. Der Gehäuseabschnitt 57 weist eine achsparallel zur durchgehenden Welle 28 angeordnete ringförmige Aufnahme 58 auf. Im Inneren der Aufnahme 58 kann das Steuerelement 40 kraft- und/oder formschlüssig angeordnet werden. Die Hohlwelle 30 erstreckt sich dabei durch die Aufnahme 58, in der die Hohlwelle 30 koaxial zu dieser angeordnet ist. Die bevorzugt zweiteilige Ausführung der Zahnräder 35, 38 vereinfacht dabei eine Nachrüstung bzw. einen späteren Austausch zu Wartungszwecken.

Die Verzahnung 47, 48 zwischen dem Steuerelement 40 und der Hohlwelle 30 bzw. dem Zahnrad 38 ermöglicht es, bei einer Ausführungsform gemäß den Fig. 10 oder 11 zusätzlich auf das Ansteuerungsverhalten Einfluss zu nehmen. So kann die Position der Stellelemente 37 zweier benachbarter Paare mit Dosierern 22 einen Versatz in Umfangsrichtung aufweisen. Somit können die Zahnräder 35 und die als kreissektorförmige Zahnradsegmente ausgeführten Stellelemente 37 der beiden Paare zu unterschiedlichen Zeitpunkten mit den Zahnrädern in Eingriff gebracht werden.

**Bezugszeichenliste**

| | | | |
|---|---|---|---|
| 1 | Dosierer | 31 | Innenkontur |
| 2 | Dosierradgehäuse | 32 | Anschlussstutzen |
| 3 | Öffnung | 33 | Aktor |
| 4 | Särad | 34 | Elektromotor |
| 5 | Grobsärad | 35 | Zahnrad |
| 6 | Steg | 36 | Stellmittel |
| 7 | Steg | 37 | Stellelement |
| 8 | Steg | 38 | Zahnrad |
| 9 | Drehrichtung | 39 | Rückstellmittel |
| 10 | Säwelle | 40 | Steuerelement |
| 11 | Bodenklappenwelle | 41 | Translatorische Bewegung |
| 12 | Bodenklappe | 42 | Feder |
| 13 | Entleerungsklappe | 43 | Dosierrad |
| 14 | Särohr | 44 | Grobsärad |
| 15 | Drillmaschine | 45 | Feinsärad |
| 16 | Saatguttank | 46 | Flansch |
| 17 | Säschar | 47 | Innenverzahnung |
| 18 | Tiefenführungsrolle | 48 | Außenverzahnung |
| 19 | Hohlscheibe | 49 | Schiefe Ebene |
| 20A | Dosierreihe | 50 | Stirnfläche |
| 20B | Dosierreihe | 51 | Führungselement |
| 21 | Särohr | 52 | Begrenzungsmittel |
| 22 | Dosierer | 53 | Endanschlag |
| 23 | Dosierradgehäuse | 54 | Antriebsvorrichtung |
| 24 | Wandsegment | 55 | Koppelwelle |
| 25 | Dosierradwelle | 56 | Steuereinheit |
| 26 | Antriebszahnrad | 57 | Gehäuseabschnitt |
| 27 | Außengewindeabschnitt | 58 | Aufnahme |
| 28 | Welle | DR | Drehrichtung |
| 29 | Abtriebszahnrad | L | Längsachse |
| 30 | Hohlwelle | | |

## Patentansprüche

1. Dosierer (22) zum Dosieren von Dosiergut, mit einem Dosierradgehäuse (23), in dem zumindest ein drehbares Dosierrad (43) zum Dosieren des Dosiergutes angeordnet ist, sowie einer drehbar angetriebenen Welle (28) zum Antreiben des Dosierrades (43), wobei
auf der Welle (28) ein Abtriebszahnrad (29) angeordnet ist, welches ein Antriebszahnrad (26) des Dosierrades (43) antreibt, das auf einer separaten Antriebswelle (25) des Dosierrades (43) angeordnet ist, **dadurch gekennzeichnet, dass** das Abtriebszahnrad in axialer Richtung relativbeweglich auf der Welle angeordnet ist, und
ein von einem Aktor (33) betätigtes Stellmittel (36) das Abtriebszahnrad (29) relativ zur Welle (28) axial verschiebt, um das Abtriebszahnrad (29) zwischen zwei Stellungen zu überführen, in denen das Abtriebszahnrad (29) und das Antriebszahnrad (26) miteinander in Eingriff oder außer Eingriff stehen.

2. Dosierer (22) nach Anspruch 1, **dadurch gekennzeichnet, dass** der Aktor (33) als Elektromotor (34) oder als ein mechanisch, pneumatisch oder hydraulisch betätigbarer Aktor ausgeführt ist.

3. Dosierer (22) nach Anspruch 1 oder 2, **dadurch gekennzeichnet, dass** der Aktor (33) eine rotatorische Bewegung auf das Stellmittel (36) überträgt und das Stellmittel (36) die vom Aktor (33) übertragene rotatorische Bewegung in eine translatorische Bewegung (41) des Abtriebszahnrades (29) überführt.

4. Dosierer (22) nach einem der Ansprüche 1 bis 3, **dadurch gekennzeichnet, dass** das Stellmittel (36) ein gegenüber der Welle (28) axial gesichertes und drehfest angeordnetes Stellelement (37) umfasst, welches zum translatorischen Bewegen des Abtriebszahnrades (29) auf einer schiefen Ebene (49) gleitet.

5. Dosierer (22) nach einem der Ansprüche 1 bis 4, **dadurch gekennzeichnet, dass** eine koaxial zur und drehfest auf der Welle (28) angeordnete und in axialer Richtung relativbewegliche Hohlwelle (30) vorgesehen ist, auf der das Abtriebszahnrad (29) drehfest angeordnet ist, wobei das Stellmittel (26) die vom Aktor (33) auf das Stellmittel (36) übertragene Bewegung in eine axiale Bewegung der Hohlwelle (30) überführt.

6. Dosierer (22) nach einem der Ansprüche 1 bis 5, **dadurch gekennzeichnet, dass** das Stellmittel (36) ein Rückstellmittel (39) umfasst, welches der Unterstützung bei einem in Eingriff bringen von Abtriebszahnrad (29) und Antriebszahnrad (36) dient.

7. Dosierer (22) nach Anspruch 6, **dadurch gekennzeichnet, dass** das Rückstellmittel (39) als Energiespeicher, insbesondere als eine Feder (42) ausgeführt ist, bevorzugt als Axialfeder, Tellerfeder, Schraubenfeder oder Elastomerfeder.

8. Dosierer (22) nach Anspruch 6, **dadurch gekennzeichnet, dass** das Rückstellmittel (39) als hydraulisch oder pneumatisch betätigbarer Zylinder, als Elektromotor, Magnet oder Elektromagnet ausgeführt ist.

9. Dosierer (22) nach Anspruch 6, **dadurch gekennzeichnet, dass** das Rückstellmittel (39) als eine weitere schiefe Ebene ausgebildet ist, welche eine zur schiefen Ebene (49) des Stellmittels (36) konträre Bewegung bewirkt.

10. Dosierer (22) nach einem der Ansprüche 4 bis 9 und dem Anspruch 5, **dadurch gekennzeichnet, dass** das
Stellmittel (36) ein Zahnrad (38) umfasst, welches auf einem koaxial zur Hohlwelle (30) angeordneten Hohlwellensegment drehfest angeordnet ist und mit einem von dem Aktor (33) angetriebenen Zahnrad (35) in Eingriff steht.

11. Dosierer (22) nach einem der Ansprüche 4 bis 9 und dem Anspruch 5, **dadurch gekennzeichnet, dass** das
Stellmittel (36) ein Kettenritzel oder eine Riemenscheibe umfasst, welches auf einem koaxial zur Hohlwelle (30) angeordneten Hohlwellensegment drehfest angeordnet ist und mit einem von dem Aktor (33) angetriebenen Kettenritzel oder Riemenschiebe durch eine Kette oder einen Riemen trieblich verbunden ist.

12. Dosierer (22) nach einem der Ansprüche 1 bis 11, **dadurch gekennzeichnet, dass** das Abtriebszahnrad (29) und das Antriebszahnrad (26) als geradverzahnte oder schrägverzahnte Zahnräder ausgeführt sind.

13. Dosierer (22) nach einem der Ansprüche 1 bis 12, **dadurch gekennzeichnet, dass** zur Begrenzung der auf das Stellmittel (36) übertragenen, insbesondere rotatorischen, Bewegung ein Begrenzungsmittel (52) vorgesehen ist.

14. Dosierer (22) nach Anspruch 13, **dadurch gekennzeichnet, dass** das Begrenzungsmittel (52) dazu eingerichtet ist, die, insbesondere rotatorische, Bewegung mechanisch oder elektromechanisch zu begrenzen.

15. Dosierer (22) nach einem der Ansprüche 4 bis 14 und den Ansprüchen 4 und 5, **dadurch gekennzeichnet, dass** ein auf
der schiefen Ebene (49) gleitendes Steuerelement (40) als ein Innenring und ein Außenring ausgeführt ist, die koaxial zur Hohlwelle (30) angeordnet am Dosierradgehäuse (23) sind, wobei der Außenring gegenüber dem Innenring in Umfangsrichtung verstellbar ausgeführt ist.

16. Dosierer (22) nach einem der Ansprüche 1 bis 15, **dadurch gekennzeichnet, dass** dem Dosierer (22) ein Überwachungsmittel zur Überwachung der auf das Stellmittel (36) übertragenen translatorischen Bewegung (41) und/oder rotatorischen Bewegung zugeordnet ist.

17. Dosierer (22) nach Anspruch 16, **dadurch gekennzeichnet, dass** das Überwachungsmittel der als ein Schrittmotor ausgeführte Aktor (33), ein Potentiometer, ein Anschlagschalter, ein Positionssensor oder ein Strom- oder Strompulsmessgerät ist.

18. Landwirtschaftliche Maschine (15), insbesondere mechanische Drillmaschine, mit zumindest einer Dosiererreihe (20A, 20B), in der mehrere Dosierer (22) nebeneinander angeordnet sind, **dadurch gekennzeichnet, dass** die Dosierer (22) nach einem der Ansprüche 1 bis 17 ausgebildet sind.

## Claims

1. A dosing unit (22) for dosing the dosing material having a dosing wheel housing (23), in which at least one rotatable dosing wheel (43) for dosing the dosing material is arranged, and a rotatably driven shaft (28) for driving the dosing wheel (43), wherein on the shaft (28) an output gear wheel (29) is arranged, which drives a drive gear wheel (26) of the dosing wheel (43), which is arranged on a separate drive shaft (25) of the dosing wheel (43), **characterised in that** the output gear wheel is arranged on the shaft so as to be relatively movable in the axial direction, and an adjusting means (36) actuated by an actuator (33) axially displaces the output gear wheel (29) relative to the shaft (28) in order to transfer the output gear wheel (29) between two positions, in which the output gear wheel (29) and the drive gear wheel (26) are engaged or disengaged.

2. The dosing unit (22) according to Claim 1, **characterised in that** the actuator (33) is embodied as electric motor (34) or as a mechanically, pneumatically or hydraulically actuatable actuator.

3. The dosing unit (22) according to Claim 1 or 2, **characterised in that** the actuator (33) transmits a rotary movement to the adjusting means (36) and the adjusting means (36) converts the rotary movement transmitted from the actuator (33) into a translational movement (41) of the output gear wheel (29).

4. The dosing unit (22) according to any one of the Claims 1 to 3, **characterised in that** the adjusting means (36) includes an adjusting element (37) which with respect to the shaft (28) is axially secured and non-rotatably arranged, which for the translational movement of the output gear wheel (29) slides on an inclined plane (49).

5. The dosing unit (22) according to any one of the Claims 1 to 4, **characterised in that** a hollow shaft (30) arranged axially relative to and non-rotatably on the shaft (28) and which is relatively movable in the axial direction is provided, on which the output gear wheel (29) is non-rotatably arranged, wherein the adjusting means (26) converts the movement transmitted from the actuator (33) to the adjusting means (36) into an axial movement of the hollow shaft (30).

6. The dosing unit (22) according to any one of the Claims 1 to 5, **characterised in that** the adjusting means (36) includes a restoring means (39), which serves for supporting engagement of output gear wheel (29) and drive gear wheel (36).

7. The dosing unit (22) according to Claim 6, **characterised in that** the restoring means (39) is embodied as energy store, in particular as a spring (42), preferably as axial spring, disc spring, coil spring or elastomer spring.

8. The dosing unit (22) according to Claim 6, **characterised in that** the restoring means (39) is embodied as hydraulically or pneumatically actuatable cylinder, as electric motor, magnet or solenoid.

9. The dosing unit (22) according to Claim 6, **characterised in that** the restoring means (39) is formed as a further inclined plane, which brings about a movement contrary to the inclined plane (49) of the adjusting means (36).

10. The dosing unit (22) according to any one of the Claims 4 to 9 and Claim 5, **characterised in that** the adjusting means (36) includes a gear wheel (38), which is non-rotatably arranged on a hollow shaft segment arranged coaxially to the hollow shaft (30) and is in engagement with a gear wheel (35) driven by the actuator (33).

11. The dosing unit (22) according to any one of the Claims 4 to 9 and Claim 5, **characterised in that** the adjusting means (36) includes a chain sprocket or a belt pulley, which is non-rotatably arranged on a hollow shaft segment arranged coaxially to the hollow shaft (30) and his drive-connected with a chain sprocket or belt pulley driven by the actuator (33) through a chain or a belt.

12. The dosing unit (22) according to any one of the Claims 1 to 11, **characterised in that** the output gear wheel (29) and the drive gear wheel (26) are embodied as straight-toothed and helically toothed gear wheels.

13. The dosing unit (22) according to any one of the Claims 1 to 12, **characterised in that** for limiting the in particular rotary movement transmitted to the adjusting means (36) a limiting means (52) is provided.

14. The dosing unit (22) according to Claim 13, **characterised in that** the limiting means (52) is equipped in order to mechanically or electromechanically limit the in particular rotary movement.

15. The dosing unit (22) according to any one of the Claims 4 to 14 and the Claims 4 and 5, **characterised in that** a control element (40) sliding on the inclined plane (49) is embodied as an inner ring and an outer ring, which are arranged on the dosing wheel housing (23) coaxially to the hollow shaft (30), wherein the outer ring relative to the inner ring is embodied so as to be adjustable in the circumferential direction.

16. The dosing unit (22) according to any one of the Claims 1 to 15, **characterised in that** the dosing unit (22) is assigned a monitoring means for monitoring the translational movement (41) and/or rotary movement. transmitted to the adjusting means (36)

17. The dosing unit (22) according to Claim 16, **characterised in that** the monitoring means is the actuator (33) embodied as stepping motor, a potentiometer, a stop switch, a position sensor or a current or current pulse meter.

18. An agricultural machine (15), in particular mechanical seed drill with at least one dosing row (20A, 20B), in which multiple dosing units (22) are arranged next to one another, **characterised in that** the dosing units (22) are formed according to any one of the Claims 1 to 17.

## Revendications

1. Doseur (22), destiné à doser un produit à doser, pourvu d'un carter (23) de roue de dosage, dans lequel est placée au moins une roue de dosage (43) rotative, pour le dosage du produit à doser, ainsi que d'un arbre (28) entraîné en rotation pour l'entraînement de la roue de dosage (43), sur l'arbre (28) étant placée une roue dentée menée (29), laquelle entraîne une roue dentée menante (26) de la roue de dosage (43), qui est placée sur un arbre d'entraînement (25) séparé de la roue de dosage (43), **caractérisé en ce que** la roue dentée menée est placée en étant déplaçable de manière relative dans la direction axiale sur l'arbre et qu'un moyen de réglage (36) actionné par un actionneur (33) déplace la roue dentée menée (29) dans la direction axiale par rapport à l'arbre (28) pour transférer la roue dentée menée (29) entre deux positions, dans lesquelles la roue dentée menée (29) et la roue dentée menante (26) se trouvent en engagement mutuel ou hors engagement mutuel.

2. Doseur (22) selon la revendication 1, **caractérisé en ce que** l'actionneur (33) est conçu sous la forme d'un moteur électrique (34) ou d'un actionneur actionnable par voie mécanique, pneumatique ou hydraulique.

3. Doseur (22) selon la revendication 1 ou 2, **caractérisé en ce que** l'actionneur (33) transmet un déplacement en rotation sur le moyen de réglage (36) et le moyen de réglage (36) transfère le déplacement en rotation transmis par l'actionneur (33) en un déplacement (41) en translation de la roue dentée menée (29).

4. Doseur (22) selon l'une quelconque des revendications 1 à 3, **caractérisé en ce que** le moyen de réglage (36) comprend un élément de réglage (37) bloqué en direction axiale par rapport à l'arbre (28) et placé de manière solidaire en rotation, qui pour le déplacement en translation de la roue dentée menée (29), coulisse sur un plan oblique (49).

5. Doseur (22) selon l'une quelconque des revendications 1 à 4, **caractérisé en ce qu'**il est prévu un arbre creux (30) placé de manière coaxiale par rapport à l'arbre (28) et de manière solidaire en rotation par rapport à celui-ci et relativement déplaçable dans la direction axiale, sur lequel la roue dentée menée (29) est placée de manière solidaire en rotation, le moyen de réglage (26) transférant le déplacement transmis par l'actionneur (33) sur le moyen de réglage (36) en un déplacement axial de l'arbre creux (30).

6. Doseur (22) selon l'une quelconque des revendications 1 à 5, **caractérisé en ce que** le moyen de réglage (36) comprend un moyen de rappel (39), lequel sert à apporter une assistance lors d'une mise en engagement de la roue dentée menée (29) et de la roue dentée menante (36).

7. Doseur (22) selon la revendication 6, **caractérisé en ce que** le moyen de rappel (39) est conçu sous la forme d'un accumulateur d'énergie, notamment d'un ressort (42), de préférence d'un ressort axial, d'un ressort Belleville, d'un ressort hélicoïdal ou d'un ressort en élastomère.

8. Doseur (22) selon la revendication 6, **caractérisé en ce que** le moyen de rappel (39) est conçu sous la forme d'un vérin actionnable par voie hydraulique ou pneumatique, d'un moteur électrique, d'un aimant ou d'un électroaimant.

9. Doseur (22) selon la revendication 6, **caractérisé en ce que** le moyen de rappel (39) est conçu sous la forme d'un plan oblique supplémentaire, lequel provoque un déplacement contraire à celui du plan oblique (49) du moyen de réglage (36).

10. Doseur (22) selon l'une quelconque des revendications 4 à 9 et selon la revendication 5, **caractérisé en ce que** le moyen de réglage (36) comprend une roue dentée (38), laquelle est placée de manière solidaire en rotation sur un segment d'arbre creux placé de manière coaxiale par rapport à l'arbre creux (30) et est en engagement avec une roue dentée (35) entraînée par l'actionneur (33).

11. Doseur (22) selon l'une quelconque des revendications 4 à 9 et selon la revendication 5, **caractérisé en ce que** le moyen de réglage (36) comprend un pignon de chaîne ou une poulie, qui est placé(e) de manière solidaire en rotation sur un segment d'arbre creux placé de manière coaxiale par rapport à l'arbre creux (30) et qui est cinématiquement relié(e) avec un pignon de chaîne ou une poulie entraîné(e) par l'actionneur (33) par une chaîne ou une courroie.

12. Doseur (22) selon l'une quelconque des revendications 1 à 11, **caractérisé en ce que** la roue dentée menée (29) et la roue dentée menante (26) sont conçues sous la forme de roues dentées à denture droite ou à denture oblique.

13. Doseur (22) selon l'une quelconque des revendications 1 à 12, **caractérisé en ce que** pour limiter le déplacement, notamment en rotation, transmis sur le moyen de réglage (36), il est prévu un moyen de limitation (52).

14. Doseur (22) selon la revendication 13, **caractérisé en ce que** le moyen de limitation (52) est configuré pour limiter par voie mécanique ou électromécanique le déplacement, notamment en rotation.

15. Doseur (22) selon l'une quelconque des revendications 4 à 14 et les revendications 4 et 5, **caractérisé en ce qu'**un élément de commande (40) coulissant sur le plan oblique (49) est conçu sous la forme d'une bague interne et d'une bague externe, qui sont placées de manière coaxiale par rapport à l'arbre creux (30) sur le carter (23) de roue de dosage, la bague externe étant conçue de manière ajustable dans la direction périphérique par rapport à la bague interne.

16. Doseur (22) selon l'une quelconque des revendications 1 à 15, **caractérisé en ce qu'**au doseur (22) est associé un moyen de supervision, destiné à superviser le déplacement (41) en translation et / ou le déplacement en rotation transmis sur le moyen de réglage (36).

17. Doseur (22) selon la revendication 16, **caractérisé en ce que** le moyen de supervision de l'actionneur (33) conçu sous la forme d'un moteur pas-à-pas est un potentiomètre, un interrupteur à butée, un capteur de position ou un ampèremètre ou un appareil de mesure des impulsions de courant.

18. Machine agricole (15), notamment semoir mécanique, pourvue d'au moins une rangée (20A, 20B) de doseurs, dans laquelle plusieurs doseurs (22) sont placés côte à côte, **caractérisée en ce que** les doseurs (22) sont conçus selon l'une quelconque des revendications 1 à 17.
